# EUROPÄISCHE PATENTSCHRIFT

(11) **EP 1 558 478 B1**
(45) Veröffentlichungstag und Bekanntmachung des Hinweises auf die Patenterteilung: **18.07.2007**
(21) Anmeldenummer: 03778281.0
(22) Anmeldetag: 23.10.2003
(51) Int. Cl.: B60T 8/40, F04B 1/04

(54) **FÖRDERVORRICHTUNG**
PUMPING DEVICE
DISPOSITIF DE POMPAGE

(30) Priorität: 26.10.2002 DE 10249909
(43) Veröffentlichungstag der Anmeldung: 03.08.2005
(73) Patentinhaber: Continental Teves AG & Co. oHG, 60488 Frankfurt am Main (DE)
(72) Erfinder: DINKEL, Dieter, 65824 Schwalbach (DE); HINZ, Axel, 61267 Neu-Anspach (DE); REINARTZ, Hans-Dieter, 60439 Frankfurt/M (DE)
(86) Internationale Anmeldenummer: PCT/EP2003/011733
(87) Internationale Veröffentlichungsnummer: WO 2004/037624

(56) Entgegenhaltungen:
- WO-A-00/06905
- WO-A-99/06697
- WO-A-99/06702
- WO-A-99/06703
- DE-A- 4 015 786
- DE-A- 10 013 269
- DE-A- 10 025 424
- US-A- 2 463 486

## Beschreibung

Die Erfindung betrifft eine Fördervorrichtung zum Fördern von Druckmittel in wenigstens eine Fahrzeugbremse, in einen Druckmittelbehälter oder in einen Druckmittelspeicher, mit einem Druckmitteleintritt und einem Druckmittelaustritt. Dabei ist ein Kolben in einem Aufnahmekörper bewegbar angeordnet und verfügt über wenigstens zwei hydraulisch wirksame Durchmesser von unterschiedlicher Größe zur Förderung in Richtung Druckmittelaustritt. Wenigstens ein Rückschlagventil dient zur Ventilation eines Arbeitsraumes, in den der Kolben eintaucht, wobei der Kolben mehrteilig ist und wenigstens zwei synchron bewegbare Teilkolben umfasst, wobei dem ersten Teilkolben der erste hydraulisch wirksame Durchmesser zugeordnet ist, und wobei dem zweiten Teilkolben der zweite hydraulisch wirksame Durchmesser zugeordnet ist.

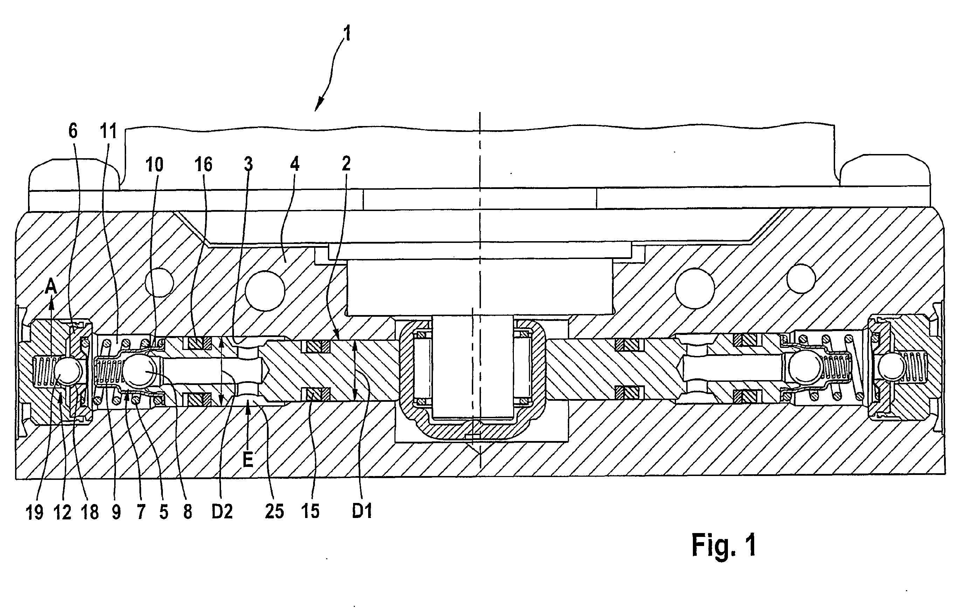

Eine Fördervorrichtung vom Typ Stufenkolbenpumpe ist grundsätzlich bekannt, und in Fig. 1 dargestellt.

Aus der WO 99/06697 A geht eine gattungsgemäße Fördervorrichtung hervor. Zwecks kostengünstiger Herstellungsverbesserung ist vorgesehen, dass der Kolben ein rohrförmiges Umformteil und eine Nadel oder einen Verschlußstopfen aufweist, welcher mit einem Zapfen in das Umformteil eingepresst ist. Dadurch sind die beiden Teilkolben gegenseitig zentriert und in Querrichtung zueinander gekoppelt. Dies erfordert eine hochpräzise Fertigungstechnik, um dennoch eine konzentrische Anordnung der beiden Teilkolben in einem Aufnahmekörper zu ermöglichen.

Es ist eine Aufgabe der vorliegenden Erfindung, eine verschleißfeste sowie hinsichtlich Herstellkosten und Bauraumbedarf verbesserte Fördervorrichtung anzugeben.

Diese Aufgabe wird gelöst, indem eine mechanische Entkopplung zwischen den hydraulisch wirksamen Durchmessern der Teilkolben vorgesehen ist, um Querkräfte am Kolben zu reduzieren. Erfindungsgemäß ist durch mechanische Entkoppelung der Bereiche mit unterschiedlichen Durchmessern die Querkraft am Kolben und dadurch der Kolbenverschleiß reduziert.

Zur weiteren Kostensenkung ermöglicht die Erfindung den Einsatz von fertig bearbeiteten Wälzlagernadeln als ersten Teilkolben. Der zweite Teilkolben wird vorzugsweise spanlos als verformtes, metallisches Umformteil oder als urgeformtes Kunststoffteil vorgesehen. Selbst wenn der zweite Teilkolben als Drehteil ausgebildet ist, wird die Fertigungstiefe beim Hersteller der Fördervorrichtung infolge verringerter Zerspanungsvorgänge reduziert.

Die Anzahl erforderlicher Bauteile wird in weiterer Ausgestaltung der Erfindung gesenkt, wenn der erste Teilkolben und der zweite Teilkolben unmittelbar im Aufnahmekörper bewegbar geführt angeordnet sind.

Zur Verringerung von Leckage ist es nach einer Ausführungsform der Erfindung von Vorteil, wenn dem ersten und dem zweiten Teilkolben jeweils ein Dichtelement zur Abdichtung des Arbeitsraumes zugeordnet ist.

Von besonderem Vorteil ist es, wenn der zweite Teilkolben einen Dichtsitz für einen Ventilkörper des Rückschlagventils aufweist. Der Bauraumbedarf wird insbesondere in Axialrichtung reduziert, wenn das Rückschlagventil in den zweiten Teilkolben integriert ist.

Soweit der Aufnahmekörper aus einem wenig verschleißfesten Werkstoff besteht, und um den zweiten Kolbenteil gewissermaßen in einer Art Laufbuchse zu führen, kann das Rückschlagventil als Saugventil ausgebildet sein, wobei ein weiteres, als Druckventil ausgebildetes Rückschlagventil vorgesehen ist, dessen Dichtsitz an einem Grundkörper vorgesehen ist, welcher einen Mantel aufweist, der den zweiten Teilkolben aufnimmt.

Wenn die Mantelfläche endseitig mit einen Anschlag versehen ist, kann dieser dazu dienen, das Dichtelement in einer Aufnahmebohrung des Aufnahmekörpers zu sichern.

Eine weiterhin kostengünstige Herstellung wird erzielt, wenn der zweite Teilkolben als Kugel ausgebildet ist, und wenn die Kugel in einem Mantel eines Grundkörpers für ein Rückschlagventil geführt angeordnet ist. Zur Reduktion der Fertigungstiefe kann es sich bei der Kugel um eine als Zukaufteil erworbene Wälzlagerkugel handeln.

Der Aufwand zur Herstellung des Rückschlagventils wird verringert, wenn dieses einstückig als Manschettenrückschlagventil ausgebildet ist.

Die Erfindung wird nachstehend anhand der Zeichnung erläutert. In der Zeichnung zeigt jeweils in größerem Maßstab.
Fig. 1 eine Fördervorrichtung nach dem Stand der Technik im Schnitt,
Fig. 2 eine erste Ausführungsform der Erfindung im Schnitt,
Fig. 3 eine zweite Ausführungsform der Erfindung im Schnitt,
Fig. 4 eine dritte Ausführungsform der Erfindung im Schnitt, und
Fig. 5 eine vierte Ausführungsform der Erfindung im Schnitt.

Die Fig. 1 zeigt eine Fördervorrichtung 1 deren einteiliger Kolben 2 in einer Bohrung 3 eines Aufnahmekörpers 4 bewegbar geführt angeordnet ist, welcher Bestandteil eines mit einer elektronischen Regeleinheit (ECU) versehenen elektrohydraulischen Aggregates zum Einsatz in insbesondere einer Kraftfahrzeugbremsanlage ist. Der Aufnahmekörper 4 weist nicht dargestellte, elektromagnetisch ansteuerbare Ventile sowie diese miteinander verbindende Kanäle auf, welche es erlauben, Druckmittel zur kontrollierten Druckerhöhung von einem jeweils schematisch skizzierten Einlaß (E) zu einem Auslaß (A), mit anderen Worten aus einem Arbeitsraum 11 in einen nicht gezeichneten Druckmittelspeicher oder in nicht verdeutlichte Fahrzeugbremsen beziehungsweise in einen Druckmittelbehälter zu fördern. Dadurch wird eine Fahrzeugbremsung, oder ein Regeleingriff wie beispielsweise ein Fahrstabilitätsregeleingriff (ESP) oder ein anderer Regeleingriff wie insbesondere eine Schlupfregelung ermöglicht.

Zur Verbesserung des Füllungsgrades im Arbeitsraum 11 besitzt die Pumpe einen Vorlademechanismus indem der Kolben 2 gestuft ausgebildet ist, und über zwei voneinander trennbare, unterschiedlich große hydraulisch wirksame Durchmesser D1, D2 verfügt. Der kleinere hydraulische Durchmesser D1 bewirkt zusammen mit einem im Aufnahmekörper 4 vorgesehenen Nachlaufraum 25, einen Aufladeeffekt für den Arbeitsraum 11, denn das im Nachlaufraum 25 vorrätige Druckmittelvolumen beseitigt Saugdrosselungseffekte, wie sie bei einfachen, ungestuften Kolbenpumpen auftreten. Der Kolben 2 liegt über ein Wälzlager mittelbar mit einem Ende an einem antreibenden Exzenter an, welcher von einer Welle eines nicht dargestellten Elektromotors in Rotation versetzt wird. Eine Rückstellfeder 5 ist zwischen einem Träger 6 für ein Rückschlagventil 12 und dem Kolben 2 angeordnet und sorgt für eine permanent wirksame Rückstellkraft.

Wie aus der Fig. 1 hervorgeht, ist zwischen Nachlaufraum 25 und Arbeitsraum 11 ein als Saugventil ausgebildetes Rückschlagventil 7 vorgesehen. Weiterhin dient ein als Druckventil ausgebildetes Rückschlagventil 12 der Ventilation des Arbeitsraumes 11. Zu diesem Zweck wird ein Ventilkörper 8 des Rückschlagventils 7 durch eine Feder 9 permanent in Schließstellung zur Anlage an einen kolbenseitigen Dichtsitz 10 gepresst. Nur in einem Saughub des Kolbens 2 überwindet die an dem Ventilkörper 8 anliegende Druckdifferenz die wirksamen Federkraft, so daß sich der Ventilkörper 8 zur Ventilation des Arbeitsraumes 11 in die nicht dargestellte Öffnungsstellung bewegt, wodurch der Druckmitteleinlaß in den Arbeitsraum 11 erfolgt. Im Druckhub ist der Druckmitteleinlaß versperrt, und das Druckmittel gelangt durch das unter Druck öffnende Rückschlagventil 12 zu dem genannten Verbraucher.

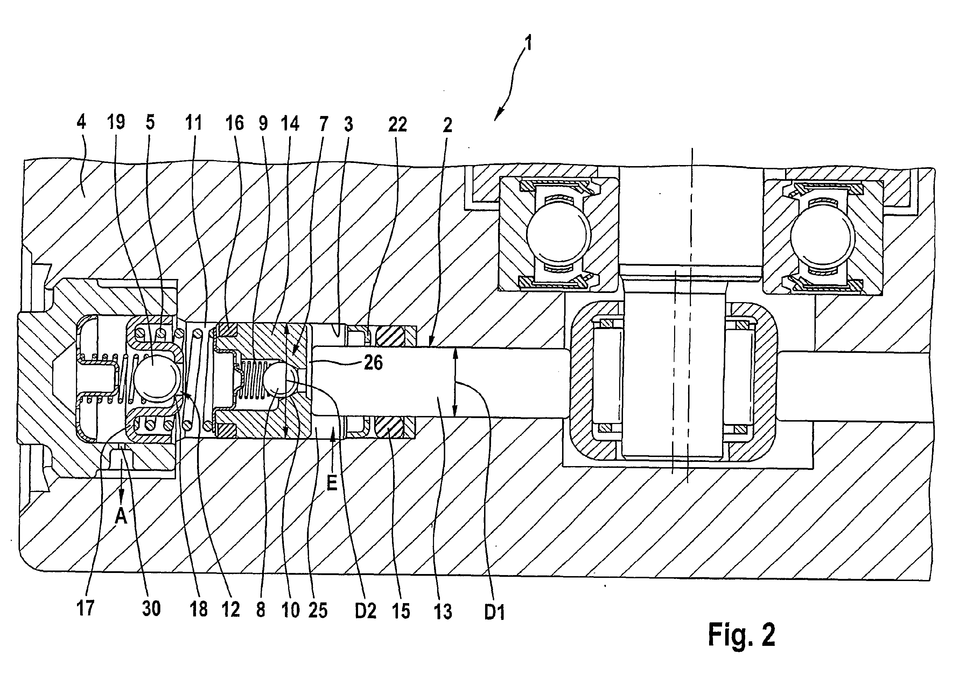

Nachstehend wird auf die Unterschiede in Fig. 2 eingegangen. Übereinstimmende Merkmale sind mit übereinstimmenden Bezugszeichen versehen. Gemäß Fig. 2 ist der Kolben 2 mehrteilig und verfügt über einen ersten sowie einen zweiten Teilkolben 13,14, welche synchron miteinander bewegbar sind, unmittelbar aneinander anliegen und in ihrer Anlagefläche einen Kanal 26 aufweisen, welcher den Nachlaufraum 25 mit dem Arbeitsraum 11 verbindendet. Beide Teilkolben 13,14 sind unmittelbar in der Bohrung 3 des Aufnahmekörpers 4 bewegbar geführt aufgenommen, und zur Abdichtung des Arbeitsraumes 11 sowie des Nachlaufraumes 25 dienen Dichtelemente 15,16. Der erste Teilkolben 13 besteht aus einer vorzugsweise im Anlieferzustand belassenen Wälzlagernadel, so dass keinerlei Bearbeitung, insbesondere spanende Bearbeitung erforderlich ist. Der zweite Teilkolben 14 ist vorzugsweise ein spanlos verformtes, metallisches Umformteil oder ein urgeformtes Kunststoffteil. Wie die Fig. 2 zeigt, ist das Rückschlagventil 7 in den zweiten Kolbenteil 14 integriert. Neben dem Rückschlagventil 7 ist in Förderrichtung sowie in axialem Abstand zu dem Teilkolben 14 noch ein weiteres, als Druckventil ausgebildetes, Rückschlagventil 12 vorgesehen, welches über einen Grundkörper 17 verfügt und eine integrierte, in Richtung Auslaß A wirksame Drossel-Bohrung 30 aufweist.

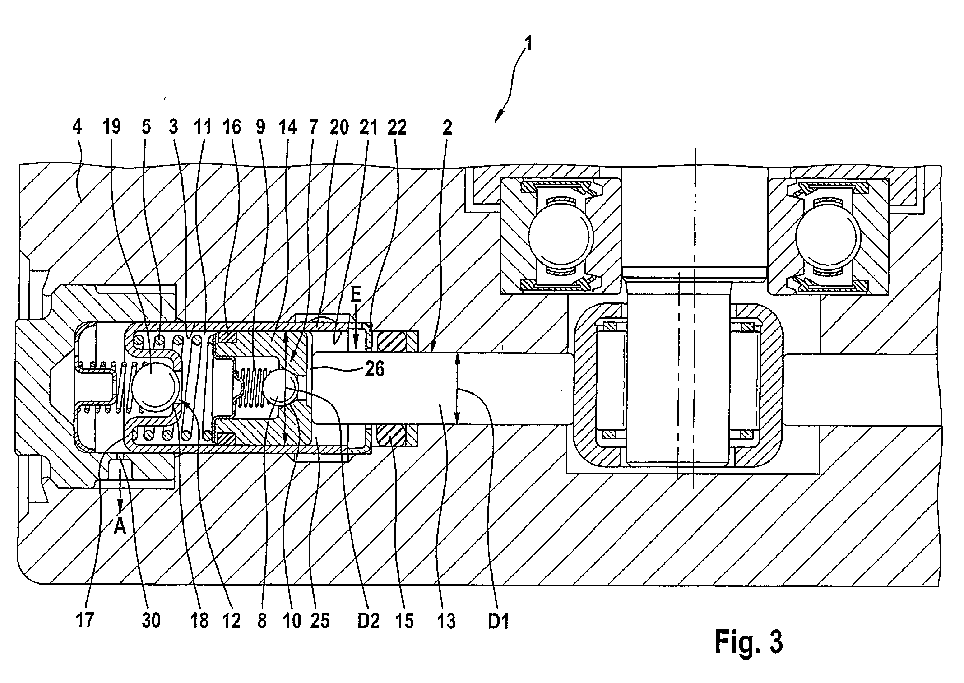

Die Ausführungsform gemäß Fig. 3 unterscheidet sich von Fig. 2, indem das weitere Druckventil 12 einen Grundkörper 17 mit einem Dichtsitz 18 für einen elastisch vorgespannten Schließkörper 19 sowie einen Mantel 20 aufweist, welcher in seinem inneren den zweiten Teilkolben 14 aufnimmt. Weil der Teilkolben 14 an einer Innenwandung 21 des Mantels 20 anläuft, dient dieser gewissermaßen als Laufbuchse für den zweiten Teilkolben 14. Wenn der Grundkörper 4 aus.wenig verschleißresistentem Werkstoff besteht, kann dadurch - eine entsprechende Verschleißfestigkeit des Mantels 20 vorausgesetzt - der Verschleißwiderstand verbessert werden. Der Mantel 20 verfügt endseitig über einen einstückig angeformten sowie nach radial innen abgekröpften Anschlag 22 zur Lagesicherung des Dichtelementes 15 in der Bohrung 3 des Aufnahmekörpers 4.

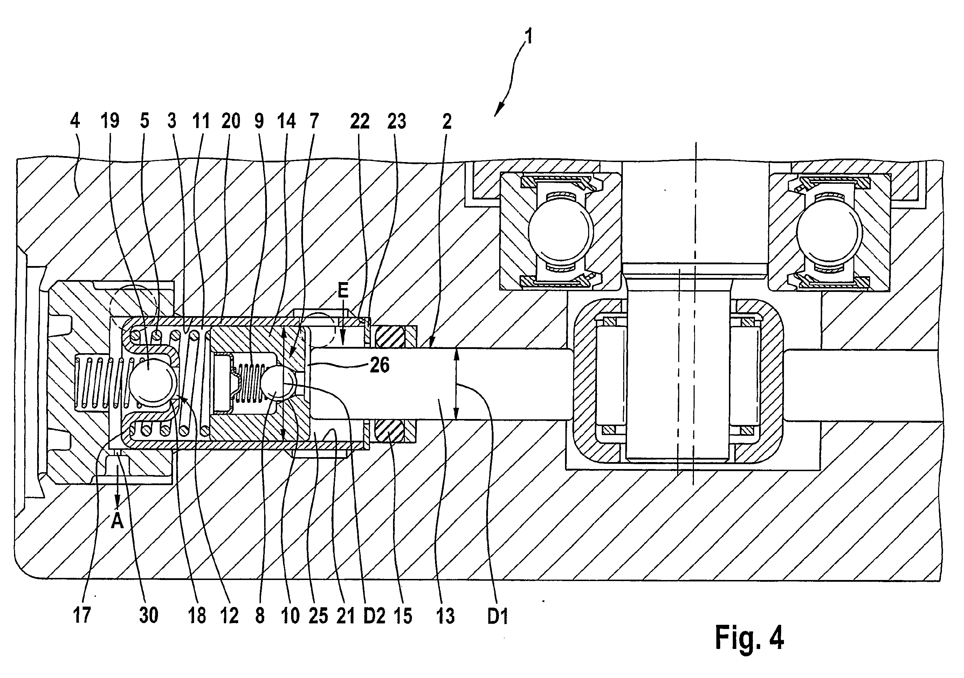

Fig. 4 unterscheidet sich von der Fig. 3 indem das Dichtelement 16 an dem zweiten Teilkolben 14 weggelassen wurde, so daß der Teilkolben 14 unmittelbar innerhalb der Innenwandung 21 des Mantels 20 läuft. Ferner weist das Rückschlagventil 12 im Unterschied zu den Fig. 2 und 3 keine Federführung auf. Zur Lagesicherung des Dichtelementes 15 dient eine gesonderte Scheibe 23, die an einer Stirnseite des Mantels 20 anliegt.

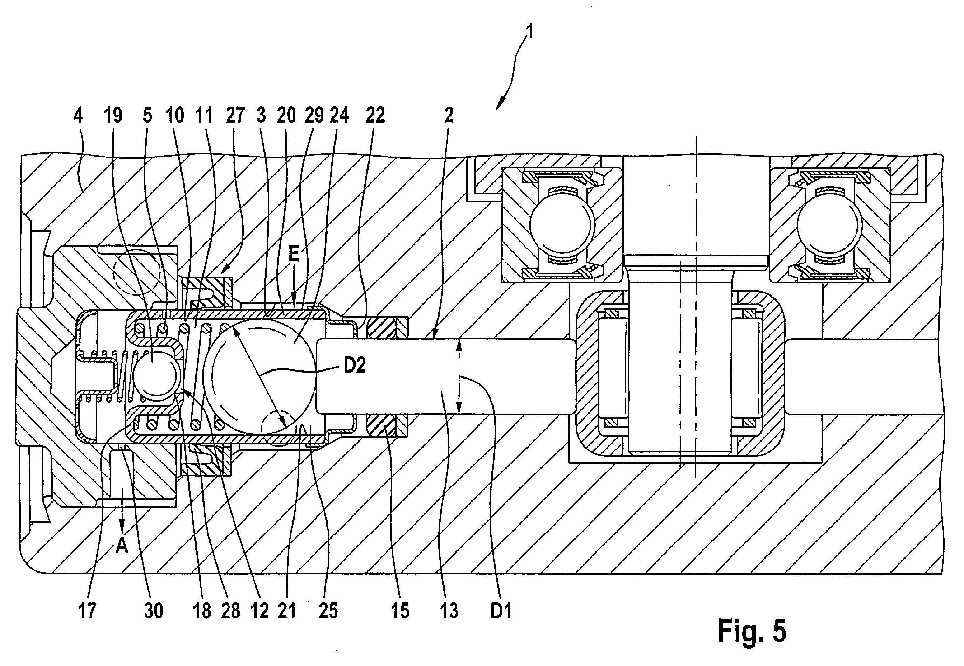

Der Fig. 5 ist eine Ausführungsform entnehmbar, wobei der zweite Teilkolben 24 als Kugel ausgebildet ist. Es handelt sich bevorzugt um eine Wälzlagerkugel. Der somit gebildete Teilkolben 24 läuft - wie in Fig. 4 dargestellt - unmittelbar an der Innenwandung 21 des von dem Grundkörper 17 ausgehenden Mantels 20 an. Eine Rückstellfeder 5 ist zwischen Grundkörper 17 und Kugel vorgesehen sowie vorgespannt. An dem anderen - grundsätzlich offenen Ende - ist der Mantel 20 derart verschlossen, daß die Kugel innerhalb des Mantels 20 verbleibt, so daß eine vormontierbare Einheit aus Grundkörper 17, Rückstellfeder 5 und Teilkolben 24 vorliegt. Bei dieser Ausführungsform der Erfindung ist das Rückschlagventil 27 (Saugventil) als einstückiges Manschettenrückschlagventil vorgesehen, dessen differenzdruckabhängig öffnende oder schließende (dynamische) Dichtlippe 28 an einer Außenwandung 29 des Mantels 20 anliegt.

### Bezugszeichenliste:

- 1: Fördervorrichtung
- 2: Kolben
- 3: Bohrung
- 4: Aufnahmekörper
- 5: Rückstellfeder
- 6: Träger
- 7: Rückschlagventil
- 8: Ventilkörper.
- 9: Feder
- 10: Dichtsitz
- 11: Arbeitsraum
- 12: Rückschlagventil
- 13: Teilkolben
- 14: Teilkolben
- 15: Dichtelement
- 16: Dichtelement
- 17: Grundkörper
- 18: Dichtsitz
- 19: Schließkörper
- 20: Mantel
- 21: Innenwandung
- 22: Anschlag
- 23: Scheibe
- 24: Teilkolben
- 25: Nachlaufraum
- 26: Kanal
- 27: Rückschlagventil
- 28: Dichtlippe
- 29: Außenwandung
- 30: Drossel-Bohrung

- E: Einlaß
- A: Auslaß
- D1: Durchmesser
- D2: Durchmesser

## Patentansprüche

1. Fördervorrichtung zum Fördern von Druckmittel in wenigstens eine Fahrzeugbremse, in einen Druckmittelbehälter oder in einen Druckmittelspeicher, mit einem Druckmitteleintritt und einem Druckmittelaustritt sowie mit den Merkmalen;
ein Kolben (2) ist in einem Aufnahmekörper bewegbar angeordnet und verfügt über wenigstens zwei hydraulisch wirksame Durchmesser (D1,D2) von unterschiedlicher Größe zur Förderung in Richtung Druckmittelaustritt;
wenigstens ein Rückschlagventil (7,12;27) dient zur Ventilation eines Arbeitsraumes (11), in den der Kolben (2) eintaucht;
der Kolben (2) ist mehrteilig und umfasst wenigstens zwei synchron bewegbare Teilkolben (13,14;13,24), wobei dem ersten Teilkolben (13) der erste hydraulisch wirksame Durchmesser (D1) zugeordnet ist, und wobei dem zweiten Teilkolben (14;24) der zweite hydraulisch wirksame Durchmesser (D2) zugeordnet ist,
**dadurch gekennzeichnet, daß**
eine mechanische Entkopplung zwischen den hydraulisch wirksamen Durchmessern (D1, D2) der Teilkolben (13,14;13,24) vorgesehen ist, um Querkräfte am Kolben (2) zu reduzieren.

2. Fördervorrichtung nach Anspruch 1, **dadurch gekennzeichnet, daß** der erste Teilkolben (13) als Wälzlagernadel vorgesehen ist, und daß der zweite Teilkolben (14;24) als spanlos verformtes, metallisches Umformteil oder als urgeformtes Kunststoffteil vorgesehen ist.

3. Fördervorrichtung nach Anspruch 1 und 2, **dadurch gekennzeichnet, daß** der erste Teilkolben (13) und der zweite Teilkolben (14;24) unmittelbar im Aufnahmekörper (4) bewegbar geführt angeordnet sind.

4. Fördervorrichtung nach Anspruch 1 und 2, **dadurch gekennzeichnet, daß** dem ersten und dem zweiten Teilkolben (13,14;24) jeweils ein Dichtelement (15,16) zur Abdichtung des Arbeitsraumes (11) zugeordnet ist.

5. Fördervorrichtung nach Anspruch 1, **dadurch gekennzeichnet, daß** der zweite Teilkolben (14;24) einen Dichtsitz (10) für einen Ventilkörper (8) des Rückschlagventils (7) aufweist.

6. Fördervorrichtung nach Anspruch 1, **dadurch gekennzeichnet, daß** das Rückschlagventil (7) in den zweiten Teilkolben (14) integriert ist.

7. Fördervorrichtung nach Anspruch 1, **dadurch gekennzeichnet, daß** das Rückschlagventil (7;27) als Saugventil ausgebildet ist, und daß ein weiteres, als Druckventil ausgebildetes Rückschlagventil (12) vorgesehen ist, dessen Dichtsitz (18) an einem Grundkörper (17) vorgesehen ist, welcher einen Mantel (20) aufweist, der den zweiten Teilkolben (14;24) aufnimmt.

8. Fördervorrichtung nach Anspruch 7, **dadurch gekennzeichnet, daß** der Mantel (20) endseitig mit einen Anschlag (22) zur Sicherung des Dichtelementes (15) in der Bohrung (3) des Aufnahmekörpers (4) versehen ist.

9. Fördervorrichtung nach Anspruch 1 , **dadurch gekennzeichnet, daß** der zweite Teilkolben (24) als Kugel ausgebildet ist, und daß die Kugel in einem Mantel (20) eines Grundkörpers (17) für ein, als Druckventil ausgebildetes, Rückschlagventil (12) geführt angeordnet ist.

10. Fördervorrichtung nach Anspruch 9, **dadurch gekennzeichnet, daß** das Rückschlagventil (7) als einstückiges Manschettenrückschlagsaugventil ausgebildet ist.

## Claims

1. A supply device for the supply of pressure fluid into at least one vehicle brake, into a pressure fluid reservoir or into a pressure fluid accumulator, with a pressure fluid inlet and a pressure fluid outlet, as well as with the features:
a piston (2) is movably arranged in an accommodating member and has at least two hydraulically active diameters (D1, D2) of different size for the supply in the direction of the pressure fluid outlet,
at least one non-return valve (7, 12; 27) is used for the ventilation of a working chamber (11) into which the piston (2) is immersed,
the piston (2) has a multi-part design and comprises at least two synchronously movable partial pistons (13, 14; 13, 24), with the first partial piston (13) exhibiting the first hydraulically active diameter (D1), and the second partial piston (14; 24) exhibiting the second hydraulically active diameter (D2),
**characterized in that** a mechanical uncoupling is provided between the hydraulically active diameters (D1, D2) of the partial pistons (13, 14; 13, 24) in order to reduce transverse forces at the piston (2).

2. The supply device as claimed in claim 1,
**characterized in that** the first partial piston (13) is provided as a rolling bearing needle, and **in that** the second partial piston (14; 24) is provided as a metal part shaped in chipless forming or as a molded plastic part.

3. The supply device as claimed in claims 1 and 2,
**characterized in that** the first partial piston (13) and the second partial piston (14; 24) are arranged and guided so as to be movable directly in the accommodating member (4).

4. The supply device as claimed in claims 1 and 2,
**characterized in that** a sealing element (15, 16) is associated in each case with the first and the second partial piston (13, 14; 24) for sealing the working chamber (11).

5. The supply device as claimed in claim 1,
**characterized in that** the second partial piston (14; 24) includes a sealing seat (10) for a valve member (8) of the non-return valve (7).

6. The supply device as claimed in claim 1,
**characterized in that** the non-return valve (7) is integrated into the second partial piston (14).

7. The supply device as claimed in claim 1,
**characterized in that** the non-return valve (7; 27) is configured as a suction valve, and **in that** another non-return valve (12) designed as a pressure valve is provided, having a sealing seat (18) provided at a base member (17) that includes a casing (20) in which the second partial piston (14; 24) is accommodated.

8. The supply device as claimed in claim 7,
**characterized in that** the casing (20) has a stop (22) at its end for securing the sealing element (15) in position in the bore (3) of the accommodating member (4) .

9. The supply device as claimed in claim 1,
**characterized in that** the second partial piston (24) is designed as a ball, and **in that** the ball is arranged and guided in a casing (20) of a base member (17) for a non-return valve (12) configured as a pressure valve.

10. The supply device as claimed in claim 9,
**characterized in that** the non-return valve (7) is designed as an integral sleeve-type non-return suction valve.

## Revendications

1. Dispositif de pompage à refouler du fluide sous pression dans au moins un frein de véhicule, un réservoir de fluide sous pression ou un accumulateur, comportant un canal d'admission de fluide sous pression et un canal de sortie de fluide sous pression, et comportant les caractères d'après:
un piston (2) est disposé de manière amovible dans un cueilleur et est prévu au moins de deux diamètres (D1, D2) d'effet hydraulique et de dimension différente pour refouler du fluide dans la direction du canal de sortie de fluide sous pression,
au moins une soupape de retenue (7,12;27) sert comme ventilation d'un espace de travaille (11) dans lequel le piston (2) se plonge,
le piston (2) est formé de plusieurs parties et comporte au moins deux pistons sectionnés (13,14 ; 13, 24) amovible de manière synchrone, le diamètre (D1) premier d'effet hydraulique étant associé au piston sectionné (13) premier et le diamètre (D2) secondaire d'effet hydraulique étant associé au piston sectionné (14 ; 24) secondaire,
**caractérisé en ce que**
un découplage mécanique est prévu entre les diamètres (D1, D2) d'effet hydraulique des pistons sectionnés (13, 14 ; 13,24) pour réduire des forces transversales au piston (2).

2. Dispositif de pompage selon la revendication 1, **caractérisé en ce que** le piston sectionné (13) premier est sous forme d'une aiguille de palier à roulement, et que le piston sectionné (14; 24) secondaire est formé comme élément de déformation métallique déformée sans enlèvement de copeaux ou comme élément plastique de formation primitive.

3. Dispositif de pompage selon les revendications 1 et 2, **caractérisé en ce que** le piston sectionné (13) premier et le piston sectionné (14; 24) secondaire sont disposés directement dans le cueilleur et guidés de manière amovible.

4. Dispositif de pompage selon les revendications 1 et 2, **caractérisé en ce qu'**un élément d'étanchement (15,16) est respectivement associé au piston sectionné premier et secondaire (13, 14; 24) pour étancher l'espace de travaille.

5. Dispositif de pompage selon la revendication 1, **caractérisé en ce que** le piston sectionné (14; 24) secondaire comporte un siège d'étanchement (10) pour un corps de soupape (8) de la soupape de retenue (7).

6. Dispositif de pompage selon la revendication 1, **caractérisé en ce que** la soupape de retenue (7) est intégrée dans le piston sectionné (14) secondaire.

7. Dispositif de pompage selon la revendication 1, **caractérisé en ce que** la soupape de retenue (7; 27) est sous forme d'une soupape d'aspiration, et qu' une autre soupape de retenue (12) en forme d'une soupape de compression est prévue le siège d'étanchement (18) de laquelle est disposé sur un corps principal (17) prévu d' une enveloppe (20) cueillant le piston sectionné (14; 24) secondaire.

8. Dispositif de pompage selon la revendication 7, **caractérisé en ce que** l'enveloppe (20) à l'extrémité de laquelle est prévu une butée (22) pour bloquer l'élément d'étanchement (15) dans l'alésage (3) du cueilleur (4).

9. Dispositif de pompage selon la revendication 1, **caractérisé en ce que** le piston sectionné (24) secondaire est en forme de boule et que la boule est disposée et guidée dans une enveloppe (20) d'un corps principal (17) pour une soupape de retenue (12) sous forme d'une soupape de compression.

10. Dispositif de pompage selon la revendication 9, **caractérisé en ce que** la soupape de retenue (7) est sous forme d'une soupape retenue d'aspiration à coupelle intégrée.
